(19) Europäisches Patentamt
European Patent Office
Office européen des brevets

(11) **EP 4 582 794 A1**

(12) **EUROPEAN PATENT APPLICATION**

(43) Date of publication:
**09.07.2025 Bulletin 2025/28**

(21) Application number: **24382599.9**

(22) Date of filing: **04.06.2024**

(51) International Patent Classification (IPC):
**G01N 21/88** (2006.01)   **G01N 21/956** (2006.01)
**G06T 7/00** (2017.01)

(52) Cooperative Patent Classification (CPC):
**G01N 21/8851; G01N 21/956; G06T 7/0004;**
G01N 2021/8887

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Konica Minolta, Inc.**
**Tokyo 100-7015 (JP)**
• **Eines Systems, S.L.U.**
**46440 Almussafes Valencia (ES)**

(72) Inventors:
• **BELDA PLA, Jesús**
**46440 Almussafes (ES)**

• **BROTO RUIZ, Jorge**
**46440 Almussafes (ES)**
• **CASTELLÓ BELDA, Jose Enrique**
**46440 Almussafes (ES)**
• **DOMINGO MARTÍNEZ, David**
**46440 Almussafes (ES)**
• **ESTEVE CUBEL, María José**
**46440 Almussafes (ES)**
• **PERERA I VERNETTA, Antoni**
**46440 Almussafes (ES)**

(74) Representative: **Elzaburu S.L.P.**
**Edificio Torre de Cristal**
**Paseo de la Castellana 259 C, planta 28**
**28046 Madrid (ES)**

(54) **DEFECT INSPECTION APPARATUS**

(57)    A defect inspection apparatus (1) that detects a defect of a workpiece surface based on a captured image obtained by capturing the workpiece surface while changing an illumination state, the defect inspection apparatus including: a measurement section (21) that measures a position of a workpiece (W); a conversion section (21) that associates a position of the workpiece surface with a position on captured images based on the position of the workpiece and a correspondence relation between a position of a workpiece model surface based on three dimensional data of a workpiece model and an imaging model and the position on the captured images; an acquisition section (21) that acquires luminance information in the illumination states from corresponding captured images by associating the position of the workpiece surface with the position on the captured images; and a defect detecting section (21) that detects the defect based on the luminance information.

FIG.1

EP 4 582 794 A1

**Description**

BACKGROUND OF THE INVENTION

TECHNICAL FIELD

The present invention relates to a defect inspection apparatus.

DESCRIPTION OF RELATED ART

Conventionally, visual inspection of appearance has been performed for quality control in manufacturing processes of various products. In the visual inspection, while the number of inspection items is large, an inspector is required to have expert inspection skills, and therefore, it is difficult to improve efficiency. Therefore, there is a demand for a technique for automating visual inspections (for example, Japanese Unexamined Patent Publication No. 2010-216870, Japanese Unexamined Patent Publication No. 2023-032374, and Japanese Unexamined Patent Publication No. 2013-195368).

In a case in which a defect on a surface of a vehicle body flowing in a production line is inspected, correction (movement correction) accompanying movement of the vehicle body is performed on a captured image obtained by capturing the surface of the vehicle body. Thus, it is necessary to acquire time-series data of pixel values at the same place on the surface of the vehicle body. In a case in which a misregistration occurs in the time-series data, the time-series data is constituted by data of pixel values at different places on the surface of the vehicle body, and thus the accuracy in defect detection is significantly reduced. Since the surface of the vehicle body has a complicated curved shape, more accurate movement correction is required in order to acquire the time-series data of the pixel values at the same place on the surface of the vehicle body.

For highly accurate movement correction, it is necessary to perform movement correction in units of frames in captured images of the surface of the vehicle body captured by a plurality of cameras. Along with this, much labor is required for setting a plurality of cameras in introduction of the defect inspection system.

In the invention described in Japanese Unexamined Patent Publication No. 2010-216870, a case in which a surface to be inspected is a substantially flat steel sheet and a surface to be inspected has a complicated curved surface shape is not assumed.

In the invention described in Japanese Unexamined Patent Publication No. 2023-032374, since an inspection target is a small object that can be grasped by an arm, it is not assumed to make a correction with the movement of a vehicle body flowing in a production line.

In the invention described in Japanese Unexamined Patent Publication No. 2013-195368, since the inspection target does not move, it is not assumed to make a correction with the movement of the vehicle body flowing in the production line.

SUMMARY OF THE INVENTION

An object of the present invention is to provide a defect inspection apparatus capable of efficiently performing defect inspection with high accuracy.

In order to solve the above problem, the defect inspection apparatus according to aspect 1 is a defect inspection apparatus (1) that detects a defect of a workpiece surface based on a captured image obtained by capturing the workpiece surface while changing an illumination state for illuminating the workpiece surface, the defect inspection apparatus including: a measurement section (21) that measures a position of a workpiece (W); a conversion section (21) that associates a position of the workpiece surface with a position on a plurality of captured images based on the position of the workpiece measured by the measurement section and a correspondence relation between a position of a workpiece model surface based on three dimensional data of a workpiece model and an imaging model and the position on the captured images captured in a plurality of illumination states; an acquisition section (21) that acquires luminance information in the plurality of illumination states from corresponding captured images at each position of the workpiece surface by associating the position of the workpiece surface with the position on the plurality of captured images; and a defect detecting section (21) that detects the defect on the workpiece surface based on the luminance information acquired by the acquisition section. The invention described in aspect 2 provides the defect inspection apparatus according to aspect 1, further comprising a calculation section (21) that calculates a feature amount in the luminance information, wherein the defect detecting section detects the defect based on the feature amount calculated by the calculation section.

The invention described in aspect 3 provides the defect inspection apparatus according to aspect 1, wherein the conversion section performs coordinate conversion between three dimensional coordinates of the workpiece model and image coordinates which are coordinates of the captured image based on the three dimensional data of the workpiece model and the imaging model to associate the position of the workpiece model surface with the position on the captured image, and corrects a correspondence relationship between the position of the workpiece model surface and the position on the captured image based on the position of the workpiece to associate the position of the workpiece surface with the position on the plurality of captured images.

The invention described in aspect 4 provides the defect inspection apparatus according to aspect 1, wherein the conversion section corrects coordinates of the workpiece model based on the position of the workpiece, and associates the position of the workpiece surface with the position on the plurality of captured images based on the three dimensional data of the workpiece model whose coordinates have been corrected and the imaging model.

The invention described in aspect 5 provides the defect inspection apparatus according to aspect 4, wherein the conversion section corrects coordinates of the workpiece model based on the position of the workpiece, and associates the position of the workpiece surface with the position on the plurality of captured images based on three dimensional data of the workpiece model whose coordinates have been corrected and ray tracing of illumination light with which the workpiece surface as the imaging model is irradiated.

The invention described in aspect 6 provides the defect inspection apparatus according to aspect 1, wherein the conversion section generates a table indicating an association between workpiece coordinates indicating the position of the workpiece surface and image coordinates indicating the position on the plurality of captured images.

The invention described in aspect 7 provides the defect inspection apparatus according to aspect 6, wherein, the table stores an association between the workpiece coordinates and the image coordinates for only a portion of the image coordinates, and the conversion section associates, with the image coordinates not stored in the table, the workpiece coordinates interpolated based on the association corresponding to other image coordinates stored in the table and including image coordinates closest to the image coordinates not stored in the table.

The invention described in aspect 8 provides the defect inspection apparatus according to aspect 1, wherein the imaging model includes information on a focal length, a position, and a posture of an imaging optical system included in an imaging section that captures the captured image.

The invention described in aspect 9 provides the defect inspection apparatus according to aspect 1, wherein the conversion section associates a workpiece coordinate indicating a position of the workpiece surface with an image coordinate indicating a position on the captured image, and associates the predetermined workpiece coordinate with the image coordinate where a coordinate corresponding to the workpiece surface does not exist.

The invention described in aspect 10 provides the defect inspection apparatus according to aspect 2, wherein, the calculation section generates a number sequence of luminance information by arranging the luminance information in different illumination states in order of change in the illumination state, and calculates two or more feature amounts from the number sequence, and the defect detecting section generates a multi-channel image by inputting the two or more feature amounts to a plurality of different channels one by one, and detects a feature of a defect appearing in the multi-channel image by a machine learning model.

The invention described in aspect 11 provides the defect inspection apparatus according to aspect 2, wherein the calculation section converts the luminance information into a vector having a predetermined number of dimensions by interpolating or compressing the luminance information, and calculates the feature amount in the vector.

The invention described in aspect 12 provides the defect inspection apparatus according to aspect 11, wherein the calculation section applies predetermined weighting to the vector. The invention described in aspect 13 provides the defect inspection apparatus according to aspect 2, wherein, the calculation section generates a number sequence of luminance information by arranging the luminance information in different illumination states in order of change in the illumination state, and calculates one feature amount from the number sequence, and the defect detecting section generates the feature amount image based on the feature amount, and detects the feature of the defect appearing in the feature amount image by the machine learning model.

The invention described in aspect 14 provides the defect inspection apparatus according to aspect 1, wherein the conversion section associates the position of the workpiece surface with the position on the plurality of captured images only for a pixel having a pixel value equal to or greater than a predetermined threshold value or within a predetermined range among the pixels of the captured images.

The invention described in aspect 15 provides the defect inspection apparatus according to aspect 1, wherein, the measurement section measures a posture of the workpiece, and the conversion section associates the position of the workpiece surface with the position on the plurality of captured images based on the position and a posture of the workpiece measured by the measurement section and a correspondence relationship between the position of the workpiece model surface and the position on the captured images captured in the plurality of illumination states.

The invention described in aspect 16 provides the defect inspection apparatus according to aspect 2, wherein the defect detecting section executes predetermined processing on the feature amount, and adjusts detection sensitivity of the defect by adjusting a threshold value in the predetermined processing.

The invention described in aspect 17 provides the defect inspection apparatus according to aspect 6, wherein, in the table, the workpiece coordinates are associated with a variable related to detection sensitivity of the defect, and the defect detecting section adjusts the detection sensitivity of the defect corresponding to a predetermined workpiece coordinate by adjusting the variable.

The invention described in aspect 18 provides the defect inspection apparatus according to aspect 1, wherein the conversion section acquires ray reflection characteristics from ray information acquired by ray tracing of illumination light with which the workpiece surface is irradiated, and associates the corresponding ray reflection characteristics to the position on the workpiece model surface.

The invention described in aspect 19 provides the defect inspection apparatus according to aspect 1, wherein the conversion section sets an inspection target region, a non-inspection target region, or both on three dimensional data of the workpiece model.

The invention described in aspect 20 provides the defect inspection apparatus according to aspect 10 or 13, wherein, the machine learning model outputs an estimated value representing a probability of the defect, and the defect detecting section adjusts detection sensitivity of the defect by adjusting a threshold value in the estimated value.

The invention described in aspect 21 provides the defect inspection apparatus according to aspect 1, wherein the conversion section corrects the imaging model based on position information and posture information of an imaging section that captures the captured image, the position information and the posture information being measured using a reference chart after installation of the imaging section.

According to the present invention, it is possible to efficiently perform highly accurate defect inspection.

BRIEF DESCRIPTION OF THE DRAWINGS

The advantages and features provided by one or more embodiments of the invention will become more fully understood from the detailed description given hereinafter and the appended drawings which are given by way of illustration only, and thus are not intended as a definition of the limits of the present invention, and wherein:

FIG. 1 is a block diagram showing a defect inspection apparatus according to the present embodiment;
FIG. 2A is a side view illustrating a configuration of an inspection unit;
FIG. 2B is a front view illustrating a configuration of an inspection unit;
FIG. 3 is a flowchart illustrating an example of a flow of reference position registration processing;
FIG. 4 is a diagram illustrating an example of an imaging range with respect to a workpiece by an imaging section;
FIG. 5 is a diagram illustrating an example of continuously captured images of the workpiece;
FIG. 6 is a flowchart illustrating an example of a flow of defect inspection processing;
FIG. 7 is a diagram illustrating an example of a reference position and a measurement position of an edge in the continuously captured images of the workpiece;
FIG. 8 is a diagram illustrating an example of normalizing time-series data of a pixel value;
FIG. 9 is a diagram illustrating an example of generating a composite image from the time-series data of the pixel value;
FIG. 10 illustrates an example of dividing the composite image into tiles;
FIG. 11A is a diagram illustrating an example of a protruded defect;
FIG. 11B is a diagram illustrating an example of a recessed defect;
FIG. 11C is a diagram showing an example of a thread protrusion;
FIG. 12 is a side view showing a configuration of the inspection unit according to a modification example 1; and
FIG. 13 is a diagram illustrating an example of measuring a distance to the workpiece by a laser range finder according to a modification example 4.

DETAILED DESCRIPTION

Hereinafter, embodiments of the present invention will be described with reference to the drawings. However, the present invention is not limited to those illustrated in the drawings.

<Configuration of Defect Inspection Apparatus>

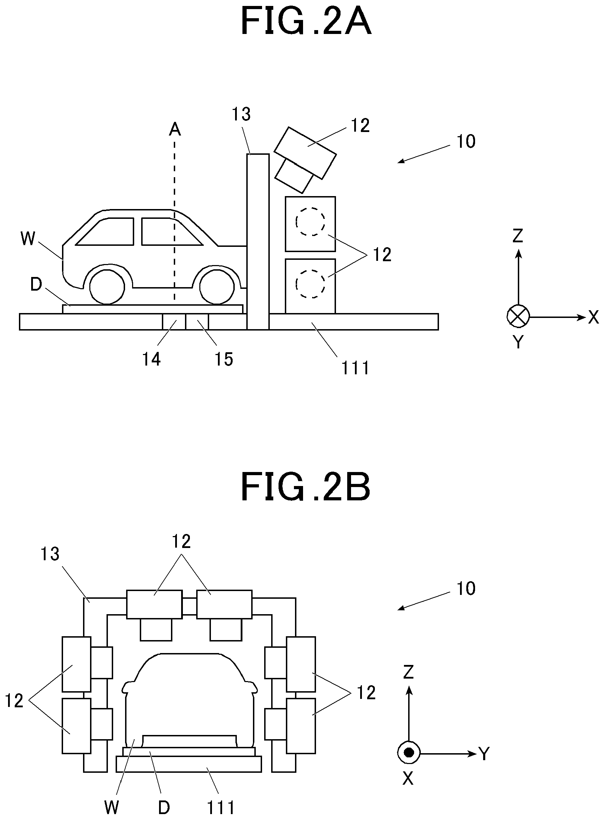

A configuration of a defect inspection apparatus according to the present embodiment will be described.

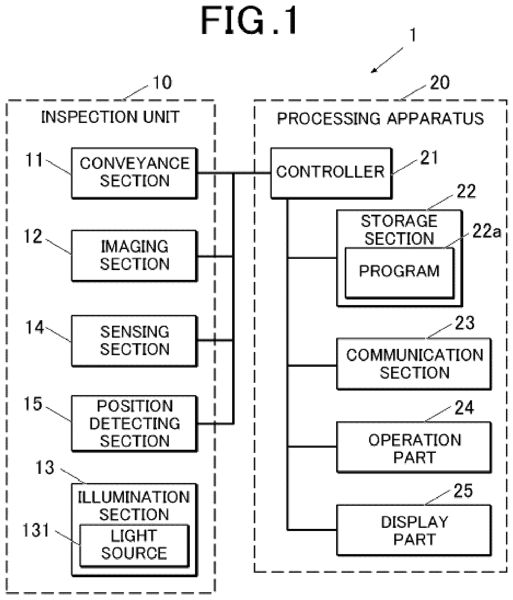

FIG. 1 is a block diagram showing a defect inspection apparatus 1 according to the present embodiment.
As illustrated in FIG. 1, the defect inspection apparatus 1 includes an inspection unit 10 and a processing apparatus 20. FIG. 2A is a side view illustrating a configuration of the inspection unit 10, and FIG. 2B is a front view illustrating the configuration of the inspection unit 10. In FIG. 2A and FIG. 2B, an X-axis direction is a direction parallel to a conveyance direction of a workpiece W as an inspection target in defect inspection processing described later, and a Y-axis direction is the widthwise direction of the workpiece W. The X-axis direction and the Y-axis direction are two horizontal directions orthogonal to each other, and a vertical direction orthogonal to an X-axis and a Y-axis is defined as a Z-axis direction.

The defect inspection apparatus 1 is an apparatus for inspecting surface defects on the workpiece W. According to the present embodiment, the workpiece W is a vehicle body. An inspected site of the workpiece W is a painted surface of a vehicle body surface, and the defect inspection apparatus 1 inspects a surface defect on the painted surface of the vehicle body surface. In general, the surface of the vehicle body is subjected to base treatment processing, metallic coating, clear coating, and the like, and a coating film layer having a multilayer structure is formed, but due to influence of a foreign substance or the like mixed during coating, an uneven defect occurs in an uppermost clear layer. Although the present embodiment is applied to inspection of such defects, the workpiece W is not limited to a vehicle body and may be something other than a vehicle body. The inspected site may be a surface other than a painted surface.

The inspection unit 10 includes a conveyance section 11, an imaging section 12, an illumination section 13, a sensing section 14, and a position detecting section 15.

The conveyance section 11 conveys the workpiece W placed on a wheeled platform D in an X-axis positive direction at a predetermined speed using the conveyor 111.

The illumination section 13 is provided at an intermediate portion in a length direction (X-axis direction) of the conveyor 111.

The illumination section 13 is formed in an arch-like gate shape as shown in the front view of FIG. 2B when viewed from the conveyance direction (X-axis direction) of the workpiece W. That is, the illumination section 13 is formed so as to surround a circumferential surface of the workpiece W except for the lower surface.

The illumination section 13 includes a light source 131 that illuminates the workpiece W. The light source 131 is, for example, a light emitting diode (LED).

The illumination section 13 linearly illuminates the circumferential surface of the workpiece W except for the lower surface with the light source 131.

The imaging section 12 includes two imaging sections 12 installed so as to be able to image the workpiece W from a Z-axis positive direction side as illustrated in FIG. 2B. As illustrated in FIG. 2B, the imaging section 12 includes two imaging sections 12 installed so as to be able to image the workpiece W from a Y-axis positive direction side. As illustrated in FIG. 2B, the imaging section 12 includes two imaging sections 12 installed so as to be able to image the workpiece W from a Y-axis negative direction side.

The imaging section 12 continuously images, as the inspected site, each portion in a circumferential direction of the workpiece W that is moved at a predetermined speed by the conveyance section 11 and is illuminated by the illumination section 13.

The sensing section 14 is a sensor that senses that the workpiece W being conveyed by the conveyor 111 has reached an inspection start position A. The sensing section 14 is connected to the processing apparatus 20 via wiring (not shown), and outputs a sensing result to the processing apparatus 20. The sensing section 14 may sense that the wheeled platform D being conveyed by the conveyor 111 has reached the inspection start position A.

The position detecting section 15 detects, with an encoder or the like, travel distance information of the workpiece W being conveyed by the conveyor 111 from the inspection start position A. The position detecting section 15 is connected to the processing apparatus 20 via wiring (not shown), and outputs the detected travel distance information of the workpiece W to the processing apparatus 20.

As described above, in the inspection unit 10, the imaging section 12 and the illumination section 13 are fixed, and the workpiece W is moved by the conveyance section 11. However, the present invention is not limited thereto. The imaging section 12 and the illumination section 13 may be moved with respect to the workpiece W which is not moved.

The processing apparatus 20 is, for example, a personal computer or the like. The processing apparatus 20 is connected to the conveyance section 11 and the imaging section 12 of the inspection unit 10 via wires (not illustrated), and controls the operation of the conveyance section 11 and the imaging section 12. The processing apparatus 20 may be connected to the illumination section 13 via wires to control the operation of the illumination section 13.

The processing apparatus 20 includes a controller 21, a storage section 22, a communication section 23, an operation part 24, and a display part 25.

The controller 21 includes, for example, a processor such as a central processing unit (CPU) or a micro processing unit (MPU), and a memory such as a random access memory (RAM). The controller 21 executes a program 22a stored in a memory such as a RAM, the storage section 22, or the like to realize various processes including a defect inspection process of the workpiece W.

The controller 21 controls the conveyance section 11 of the inspection unit 10 to convey the workpiece W in the X-axis positive direction.

The controller 21 controls the imaging section 12 of the inspection unit 10 to continuously image the surface of the workpiece W at predetermined intervals.

The controller 21 determines the timing of imaging by the imaging section 12 based on the sensing result by the sensing section 14 of the inspection unit 10 and the travel distance information of the workpiece W detected by the position detecting section 15 of the inspection unit 10.

The storage section 22 includes, for example, any storage module such as a hard disk drive (HDD), a solid state drive (SSD), a read only memory (ROM), a RAM, or the like. The storage section 22 stores, for example, a system program, an application program, and various kinds of data. To be specific, the storage section 22 stores a program 22a for executing a defect inspection process or the like of the workpiece W.

The storage section 22 stores a first coordinate conversion table for converting coordinates (image coordinates) in a captured image captured by the imaging section 12 and workpiece model two dimensional coordinates. The workpiece model two dimensional coordinates are two dimensional coordinates set with reference to the workpiece W in the workpiece model. The communication section 23 includes, for example, a network interface card (NIC), a communication module including a receiver and a transmitter, and the like. The communication section 23 communicates various kinds of information and data with an external device or the like connected via a network such as the Internet.

The operation part 24 includes, for example, a mouse, a keyboard, a switch, a button, and the like. The operation part 24 may be, for example, a touch screen integrally combined with the display part 25, or may be an interface that receives sound input. The operation part 24 receives an instruction corresponding to various input operations from a user, converts the received instruction into an operation signal, and outputs the operation signal to the controller 21.

The display part 25 is, for example, a liquid crystal display, an organic electro luminescence (EL) display, or the like. The display part 25 performs display based on display data output from the controller 21.

<First Coordinate Conversion Table >

Next, the first coordinate conversion table for converting image coordinates and workpiece model two dimensional coordinates will be described.

The controller 21 of the processing apparatus 20 generates the first coordinate conversion table based on three dimensional data of the workpiece model and ray tracing (imaging model) of illumination light with which the surface of the workpiece W is irradiated by ray simulation software using information of an imaging optical system. Three dimensional data of the workpiece model includes shape data representing the three dimensional shape of the workpiece W. The information of the imaging optical system is, for example, a focal length, a position, a posture, and the like of the imaging section 12. The ray simulation software may be computer graphics (CG) software.

To be specific, the controller 21 associates, for each frame of the captured image, coordinates (image coordinates) on the captured image with 3D coordinates (workpiece model three dimensional coordinates) on the workpiece model for all the captured images captured at the time of execution of the defect inspection processing. Thus, the controller 21 associates the position on the captured image with the position of the workpiece model surface. The image coordinates are represented by (X, Z). The workpiece model three dimensional coordinates are represented by (CX, CY, CZ).

The controller 21 associates image coordinates having no coordinates corresponding to the workpiece model three dimensional coordinates with coordinates outside the workpiece model three dimensional coordinates. The coordinates outside the workpiece model three dimensional coordinates are, for example, (CX, CY, CZ) _ (0, 0, 0).

The controller 21 sets a region to be excluded from the inspection target region as a non-inspection target region on the workpiece model. The controller 21 associates the image coordinates corresponding to the region to be excluded from the inspection target region with coordinates outside the workpiece model three dimensional coordinates. The controller 21 may set an inspection target region, a non-inspection target region, or both on the three dimensional data of the workpiece model.

Next, the controller 21 generates the first coordinate conversion table by converting the workpiece model three dimensional coordinates into the workpiece model two dimensional coordinates, and stores the first coordinate conversion table in the storage section 22. Thus, the first coordinate conversion table for converting the image coordinates into the workpiece model two dimensional coordinates is expressed by the following Expression (1).

$$\text{Expression (1)} \quad (MX, MZ) = f(\text{frame}, X, Z)$$

"MX" and "MZ" indicate coordinate positions in the workpiece model two dimensional coordinates defined by the X-axis and a Z-axis that are orthogonal to each other.

"X" and "Z" represent coordinate positions in a captured image which is a two dimensional plane defined by the X-axis and the Z-axis orthogonal to each other and is captured by the imaging section 12.

The "frame" is a frame number in continuously captured images captured by the imaging section 12.

<Operation of Defect Inspection Apparatus>

Next, an operation of the defect inspection apparatus 1 according to the present embodiment will be described.

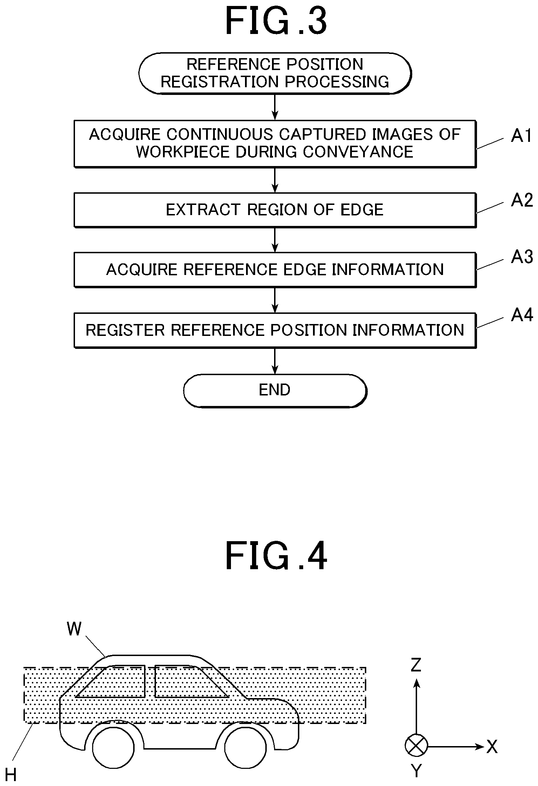

The controller 21 of the processing apparatus 20 executes reference position registration processing illustrated in FIG. 3 before executing the defect inspection processing on the workpiece W.

(Reference Position Registration Processing)

The controller 21 controls the conveyance section 11 to convey the workpiece W in the X-axis positive direction. Next, the controller 21 determines the timing of imaging by the imaging section 12 based on the sensing result by the sensing section 14 and the travel distance information of the workpiece W detected by the position detecting section 15. Next, at the determined imaging timing, the controller 21 causes the imaging section 12 to continuously capture at a predetermined interval the workpiece W being conveyed, and acquires continuously captured images of the workpiece W (step A1).

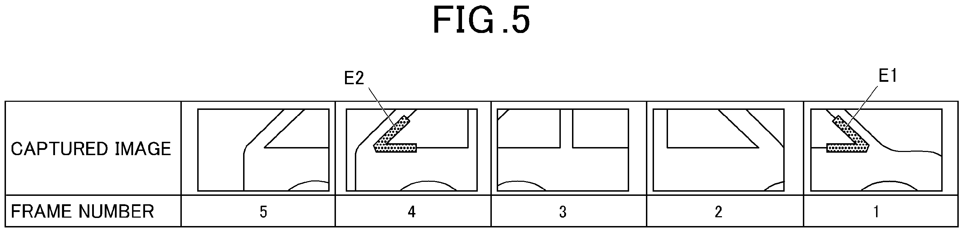

FIG. 4 illustrates an example of an imaging range H of the workpiece W by the imaging section 12. FIG. 5 illustrates an example of the continuously captured images acquired in step A1.

As shown in FIG. 5, the controller 21 causes the imaging section 12 to perform imaging such that most of the imaging ranges in the captured images with the previous and subsequent frame numbers overlap each other. Thus, the controller 21 acquires a plurality of captured images in which the imaging range of the captured images is continuously shifted in the conveyance direction of the workpiece W.

Next, the controller 21 extracts, from among the continuously captured images of the workpiece W acquired in step A1, an image that has been captured around the start of image capturing and that includes a characteristic edge. In addition, the controller 21 extracts, from among the continuously captured images of the workpiece W acquired in step A1, an image that was captured near the end of image capturing and that includes a characteristic edge.

In the example illustrated in FIG. 5, the controller 21 extracts the image of the frame number "1" including the characteristic edge E1 and the image of the frame number "4" including the characteristic edge E2.

Next, the controller 21 extracts an edge region from the extracted image (step A2).

Next, the controller 21 acquires reference edge information that is information on the edge region extracted in step A2 (step A3). The edge information includes the frame number of the image including the edge and position information of the edge, which is shape information of the edge. The reference edge information includes reference position information that is position information of the edge serving as a reference.

The controller 21 may acquire the edge information from the entire image including the extracted edge without extracting the edge region from the extracted image.

Next, the controller 21 registers the reference position information by storing the reference edge information acquired in step A3 in the storage section 22 (step A4).

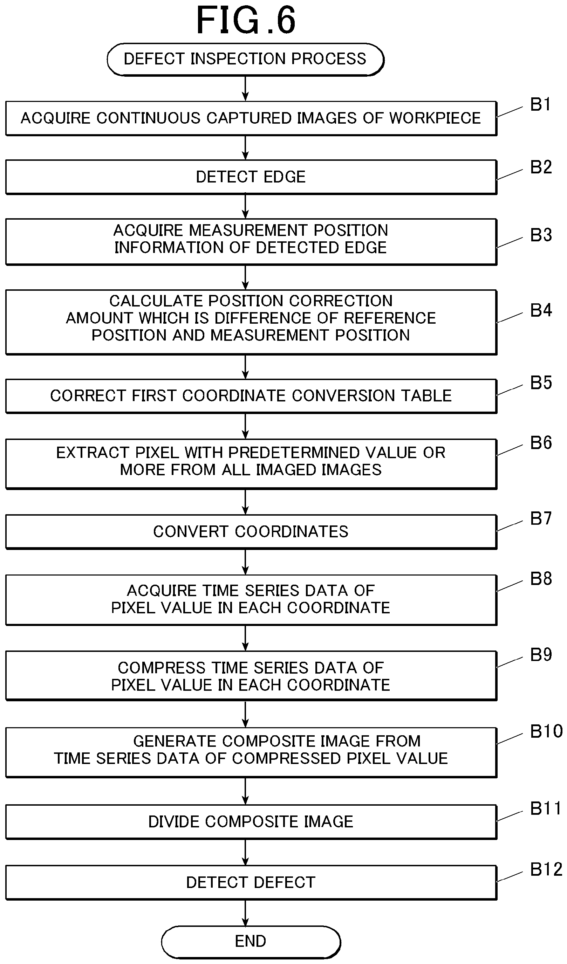

Next, a flow of the defect inspection processing (see FIG. 6) in which the defect inspection apparatus 1 inspects the surface defect of the workpiece W will be described.

The defect inspection apparatus 1 detects the defect on the surface of the workpiece W on the basis of the captured image obtained by capturing the surface of the workpiece W while changing an illumination state for illuminating the surface of the workpiece W by executing defect inspection processing. Changing the illumination state in which the surface of the workpiece W is illuminated includes changing the position of a bright band with respect to the surface of the workpiece W as the workpiece W relatively moves with respect to the illumination section 13. The bright band is a portion illuminated by the illumination section 13 in the captured image.

(Defect Inspection Processing)

Similarly to step A1 of the reference position registration processing, the controller 21 of the processing apparatus 20 causes the imaging section 12 to continuously capture at a predetermined interval the workpiece W being conveyed, and acquires continuously captured images of the workpiece W (step B1).

Next, the controller 21 performs template matching on the continuously captured images of the workpiece W acquired in step B1, using the reference edge information stored in step A4 as template data. Thus, the controller 21 detects the edge from the continuously captured images of the workpiece W (step B2).

Next, the controller 21 acquires edge information of the edge detected in step B2 (step B3).

The edge information of the edge detected in step B2 includes measurement position information which is position information of the edge.

In step B3, the controller 21 measures the position of the workpiece W by acquiring measurement position information on the edge. The controller 21 functions as a measurement section.

Next, the controller 21 compares the reference position information registered in step A4 with the measurement position information of the edge acquired in step B3. Thus, the controller 21 calculates a position correction amount that is a difference between the reference position indicated by the reference position information and the measurement position indicated by the measurement position information (step B4).

The difference between the reference position and the measurement position occurs due to a shift of the workpiece W in the conveyance direction (X-axis direction) in the captured image, a shift of the workpiece W in the vehicle height direction (Z-axis direction) in the captured image, or the like. The difference between the reference position and the measurement position may be generated due to enlargement, reduction, rotation in the XY plane, or the like performed on the workpiece W in the captured image.

In a case where the wheeled platform D is not horizontally placed on the conveyor 111, a case where the workpiece W is not horizontally placed on the wheeled platform D, or the like, a shift of the workpiece W in the conveyance direction and the vehicle height direction occurs in the captured image.

When there is a variation in the height (width in the Z-axis direction) of the wheeled platform D, a shift of the workpiece W in the vehicle height direction occurs in the captured image. In a case where the sensing section 14 senses that the wheeled platform D has reached the inspection start position A and the position of the workpiece W with respect to the wheeled platform D is shifted from the reference position, the shift of the workpiece W in the conveyance direction occurs in the captured image.

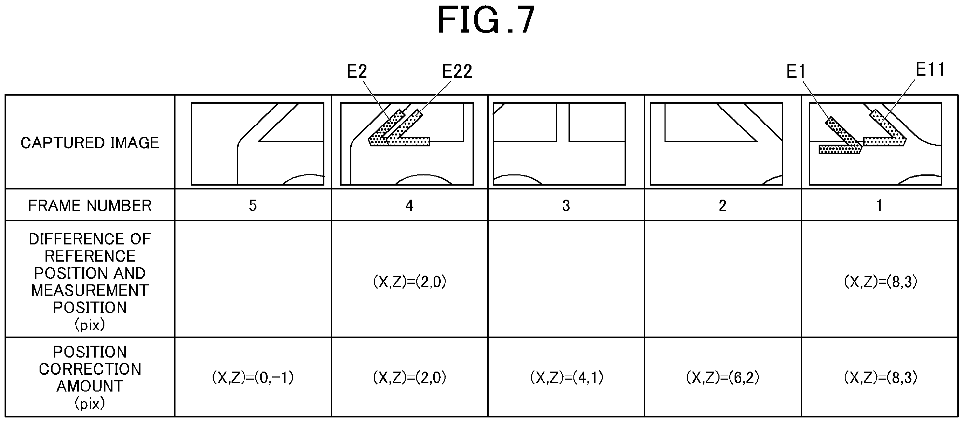

FIG. 7 shows an example of the reference position and the measurement position of the edge in the continuously captured images of the workpiece W.

In the example illustrated in FIG. 7, the difference between the reference position of the edge E1 and the measurement position of the edge E11 in the image of the frame number "1" is (X, Z) = (8 pixels, 3 pixels). The difference between the reference position of the edge E2 and the measurement position of the edge E22 in the image of the frame number "4" is (X, Z) = (2 pixels, 0 pixels).

In this case, in step B4, the controller 21 sets the position correction amount in the image of the frame number "1" to (X, Z) = (8 pixels, 3 pixels). The controller 21 sets the position correction amount in the image of the frame number "4" to (X, Z) = (2 pixels, 0 pixels). Next, based on the position correction amounts in the image of the frame number "1" and the image of the frame number "4", the controller 21 calculates position correction amounts in the images of the frame numbers "2", "3", and "5" by linear interpolation. The controller 21 may calculate the position correction amount from the difference between the reference position and the measurement position in all of the continuously captured images.

Next, the controller 21 corrects, based on the position correction amount calculated in step B4, the first coordinate conversion table for coordinate conversion between image coordinates and workpiece model two dimensional coordinates (step B5).

In step B5, when the position correction amount is defined as (X, Z) = $(\Delta X, \Delta Z)$, the controller 21 corrects the first coordinate conversion table by the following Expression (2).

$$\text{Expression (2) } (MX, MZ) = f (\text{frame}, X-\Delta X, Z-\Delta Z)$$

For example, since the position correction amount in the image of the frame number "1" described above is (X, Z) = (8 pixels, 3 pixels), the corrected first coordinate conversion table corresponding to the image of the frame number "1" described above is expressed by the following Expression (3).

$$\text{Expression (3) } (MX, MZ) = f (1, X-8 \text{ pixels}, Z-3 \text{ pixels})$$

For example, since the position correction amount in the image of the frame number "4" described above is (X, Z) = (2 pixels, 0 pixels), the corrected first coordinate conversion table corresponding to the image of the frame number "4" described above is expressed by the following Expression (4).

$$\text{Expression (4) } (MX, MZ) = f (4, X-2 \text{ pixels}, Z-0 \text{ pixels})$$

The first coordinate conversion table after the correction in step B5 is a second coordinate conversion table for converting image coordinates into workpiece coordinates. That is, the second coordinate conversion table indicates a correspondence between the workpiece coordinates indicating a position on the surface of the workpiece W and the image coordinates indicating positions on the plurality of captured images.

As described above, the controller 21 generates the second coordinate conversion table based on the position of the workpiece W measured in step B3 and the first coordinate conversion table. Thus, the controller 21 associates the position on the workpiece surface (workpiece coordinates) with the positions on the plurality of captured images (image coordinates). The controller 21 functions as a conversion section. The first coordinate conversion table indicates a correspondence relationship between a position of the workpiece model surface based on the three dimensional data of the workpiece model and the imaging model and a position on each captured image captured in a plurality of illumination states.

As described above, the controller 21 associates image coordinates having no coordinates corresponding to the workpiece model three dimensional coordinates with coordinates outside the workpiece model three dimensional coordinates. Therefore, the controller 21 associates the image coordinates having no coordinates corresponding to the workpiece surface with the predetermined workpiece coordinates in the second coordinate conversion table. The predetermined workpiece coordinates are, for example: (0, 0)).

Next, the controller 21 extracts the pixel having the pixel value of a predetermined value (e.g., 40) or more in all captured images of the workpiece W acquired in step B1 (step B6). Pixels whose pixel values in the captured image are equal to or more than a predetermined value are pixels near the bright band.

Next, the controller 21 uses the second coordinate conversion table to perform coordinate conversion for converting the image coordinates of the pixel extracted in step B6 into workpiece coordinates (step B7). In other words, the controller 21 associates the position of the workpiece surface (workpiece coordinates) with the positions on the plurality of captured images (image coordinates) only for the pixel having the pixel values equal to or larger than a predetermined threshold value or within a predetermined range among the pixels of the captured images.

The second coordinate conversion table of the present embodiment stores the association between the image coordinates and the workpiece coordinates for only a part (e.g., 1/16 of the total number of pixels) of the total number of pixels in the captured image. The controller 21 performs interpolation for a pixel for which the association is not stored, using the stored associations of other pixels. That is, the controller 21 associates image coordinates not stored in the second coordinate conversion table (non-stored coordinates) with workpiece coordinates interpolated based on the association of other image coordinates stored in the second coordinate conversion table. The other image coordinates include the image coordinates closest to the non-stored coordinates, and are image coordinates of four points forming a rectangle enclosing the non-stored coordinates.

Next, the controller 21 arranges the pixel values at the respective workpiece coordinates after the coordinate conversion in step B7 in the order of the frame number of the captured image, and acquires the time-series data of the pixel value at each workpiece coordinate (step B8).

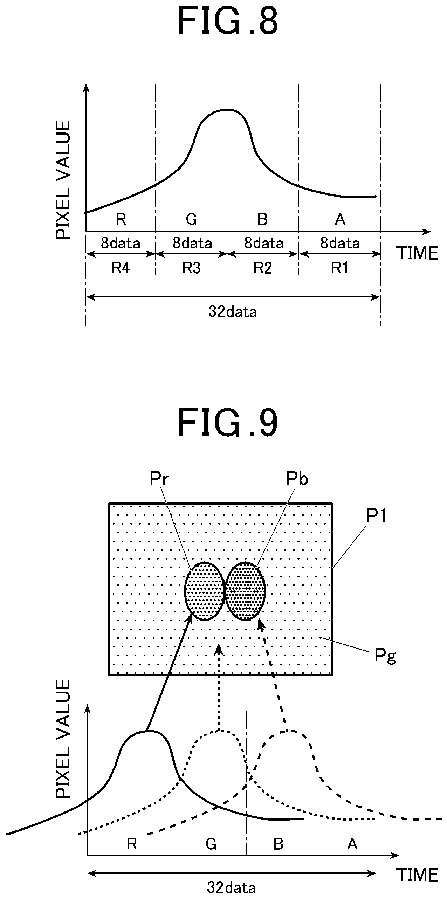

In other words, the controller 21 acquires, from the corresponding captured images, the luminance information under the plurality of illumination states at each position (each workpiece coordinate) on the surface of the workpiece according to the association between the position (workpiece coordinate) on the surface of the workpiece and the positions (image coordinates) on the plurality of captured images. The controller 21 functions as an acquisition section. The luminance information includes a pixel value. Next, as shown in FIG. 8, the controller 21 normalizes the time-series data of the pixel value at each workpiece coordinate acquired in step B8 into 32 pieces of data. The example shown in FIG. 8 is a case where a defect (protruded defect) protruding from the vehicle body surface is generated on the vehicle body surface.

When the number of the time-series data of the pixel value at each workpiece coordinate acquired in step B8 is not 32, the controller 21 converts the acquired time-series data of the pixel value into 32 pieces of data by interpolation or compression.

Next, the controller 21 divides the 32 pieces of data corresponding to each workpiece coordinate by eight, that is, divides the time-series data of the pixel value into four regions, and calculates the representative value of the eight pieces of data included in each region. The representative value of the eight pieces of data is a feature amount such as an average value, a median value, or a mode value of the eight pieces of data. Accordingly, the controller 21 calculates four representative values respectively corresponding to the four regions, thereby compressing the time-series data of the pixel value at each workpiece coordinate (step B9).

That is, the controller 21 generates a number sequence (time-series data) of luminance information by arranging pieces of luminance information under different illumination states in order of change in the illumination state (time-series order), and calculates two or more feature amounts from the number sequence. In other words, the controller 21 calculates a feature amount in the luminance information. The controller 21 functions as a calculation section.

Next, the controller 21 inputs the four representative values respectively corresponding to the four regions calculated in step B9 to four channels of R (Red), G (Green), B (Blue), and A (Alpha) one by one. As a result, the controller 21 generates a composite image that is a color image of the time-series data of the pixel value (step B10). In the example illustrated in FIG. 8, the controller 21 inputs the representative value for the region R1 to the A (Alpha) channel. The controller 21 inputs the representative value for the region R2 to the B (Blue) channel. The controller 21 inputs the representative value for the region R3 to the G (Green) channel. The controller 21 inputs the representative value for the region R4 to the R (Red) channel.

In step B10, the controller 21 may generate the composite image of the time-series data of the pixel value by inputting the representative value for the divided regions of the time-series data of the pixel value to the three channels of R, G, and B one by one.

As described above, the time-series data of the pixel value is displayed as a color image, so that a temporal change in the pixel value can be easily recognized by human eyes. Thus, it is possible to make it easier to perform annotation work for machine learning in an inspection model (described later).

FIG. 9 shows an example of the composite image P1 in a case where the protruded defect has occurred on the vehicle body surface.

As illustrated in FIG. 9, in the composite image P1, a phase shift that is a timing at which the mirror images of the light source 131 of the illumination section 13 appear appears as a difference in color.

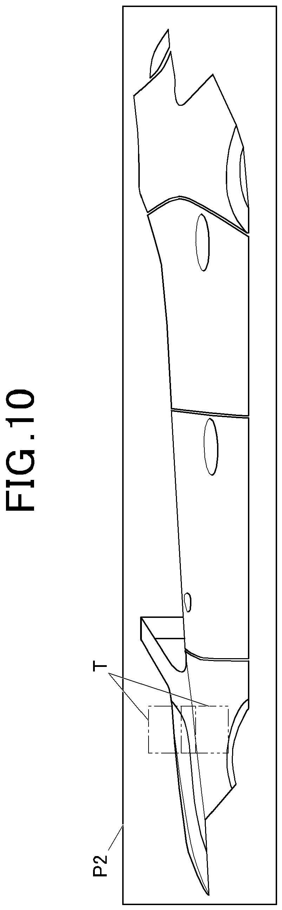

In the example shown in FIG. 9, a green portion Pg displayed in green in the composite image P1 is a region in which no surface defect occurs. A red portion Pr displayed in red in the composite image P1 is a region in which the mirror image of the light source 131 appears earlier than in the green portion Pg due to the protruded defect. A blue portion Pb displayed in blue in the composite image P1 is a region in which the mirror image of the light source 131 appears later than in the green portion Pg due to the protruded defect. Next, the controller 21 divides the composite image generated in step B10 (step B11). FIG. 10 shows an example of the composite image P2 generated by executing step B10 for all the workpiece coordinates.

In step B11, the controller 21 divides the entire composite image P2 into tiles T of, for example, 640 × 640 pixel-size. The controller 21 divides the composite image P2 such that the tiles T overlap each other by, for example, 30%.

Next, the controller 21 inputs each of the tiles T obtained by the division in step B11 into the inspection model, and acquires an estimated value indicating the probability of a defect, which is a result outputted from the inspection model. Next, when the estimated value is equal to or greater than a predetermined threshold value, the controller 21 determines that a surface defect has occurred, detects the surface defect (step B12), and ends the defect inspection process. The inspection model is a machine learning model that has undergone machine learning for defects on vehicle body surfaces in advance, and is, for example, a machine learning model using TensorFlow.

In other words, the controller 21 detects the defect on the surface of the workpiece W based on the brightness information acquired in step B8. The controller 21 functions as a defect detecting section.

The controller 21 of the present embodiment generates a multi-channel image (composite image) by inputting two or more feature amounts in the luminance information to a plurality of different channels one by one, and detects a feature of the defect appearing in the multi-channel image by the machine learning model (inspection model).

The controller 21 may perform the following processing on the inspection model.

Specifically, the controller 21 may adjust the detection sensitivity of the defect by adjusting the threshold value for the estimated value indicating the probability of the defect which is the output result of the inspection model. The controller 21 may set the threshold value uniformly for all the tiles T, or may enable setting of the threshold value for each workpiece coordinate in the second coordinate conversion table. In other words, in a case where a variable related to the detection sensitivity of the defect is associated with the workpiece coordinates in the second coordinate conversion table, the controller 21 adjusts the detection sensitivity of the defect corresponding to the predetermined workpiece coordinates by adjusting the variable.

In this case, the controller 21 may increase the detection sensitivity of the defect at the workpiece coordinates corresponding to the conspicuous place of the vehicle body or may decrease the detection sensitivity of the defect at the workpiece coordinates corresponding to the inconspicuous place of the vehicle body or the place of the vehicle body where there is a large amount of noise.

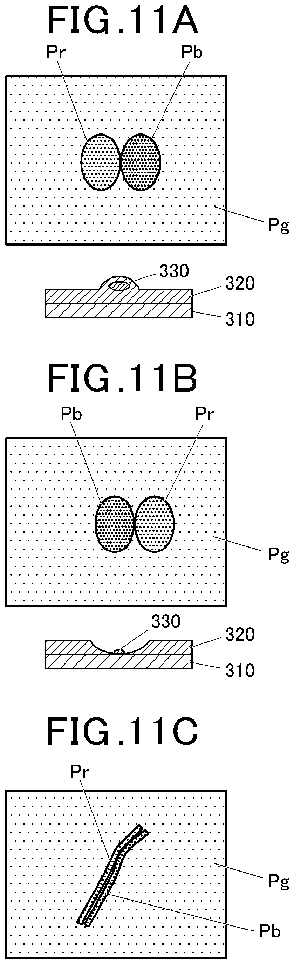

FIGS. 11A to 11C illustrate an example of a defect on the vehicle body surface that the inspection model machine-learns in advance.

The example illustrated in FIG. 11A is a protruded defect in which a foreign substance 330 is mixed in a coating film layer 320 formed on a raw material 310 of a vehicle body and thus the surface of the coating film layer 320 is in a state of protruding relative to other places.

In the composite image in this case, the green portion Pg is the region in which no surface defect occurs. The red portion Pr is the region in which the mirror image of the light source 131 appears earlier than in the green portion Pg due to the protruded defect. The blue portion Pb is the region in which the mirror image of the light source 131 appears later than in the green portion Pg due to the protruded defect.

The example illustrated in FIG. 11B is a recessed defect, which is a state where, after the coating film layer 320 is coated on the raw material 310 of the vehicle body, a coating material is not uniformly adhered to the vehicle body due to the foreign substance 330 or the like and a recess is partially generated in the coating film layer 320.

In the composite image in this case, the green portion Pg is the region in which no surface defect occurs. The red portion Pr is the region in which the mirror image of the light source 131 appears later than in the green portion Pg due to the recessed defect. The blue portion Pb is the region in which the mirror image of the light source 131 appears earlier than in the green portion Pg due to the recessed defect.

The example illustrated in FIG. 11C is a thread protrusion in which a thread-shaped foreign substance 330 is mixed in the coating film layer 320 formed on the raw material 310 of the vehicle body and thus the surface of the coating film layer 320 is in a state of linearly protruding relative to other places.

In the composite image in this case, the green portion Pg is the region in which no surface defect occurs. The red portion Pr is the thread-like region in which the mirror image of the light source 131 appears earlier than in the green portion Pg due to the thread protrusion. The blue portion Pb is the thread-like region in which the mirror image of the light source 131 appears later than in the green portion Pg due to the thread protrusion.

The defects on the surface of the vehicle body for which the inspection model performs machine learning in advance include, in addition to the protruded defect, the recessed defect, and the thread protrusion, coating defects such as a scratch, discoloration, a side mark, and a sag.

<Modification Example>

Although the present embodiment has been described above, the specific configuration is not limited to the above-described present embodiment and can be changed without departing from the spirit and scope of the invention. Hereinafter, modification examples of the present embodiment will be described. In the modification example, components similar to those of the above embodiment are denoted by the same reference numerals, and description thereof will be omitted.

(Modification Example 1)

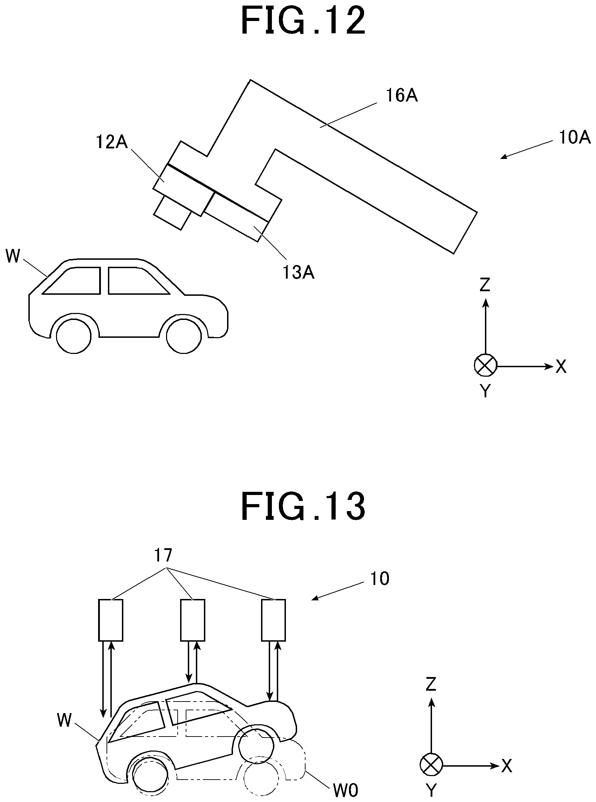

FIG. 12 is a side view showing the configuration of the inspection unit 10A according to a modification example 1.

The inspection unit 10A of modification example 1 includes an imaging section 12A, an illumination section 13A, a robot arm 16A, and the like.

The imaging section 12A and the illumination section 13A are mounted on a tip of the robot arm 16A.

The robot arm 16A is an articulated robot. The robot arm 16A can arrange the imaging section 12A and the illumination section 13A at a set predetermined distance with respect to the surface of the workpiece W which is a curved surface under the control of the controller 21.

In a state where the illumination section 13A is turned on, the controller 21 of the processing apparatus 20 according to modification example 1 controls the imaging section 12A to image the surface of the workpiece W in the stopped state. The controller 21 controls the robot arm 16A to move the imaging section 12A and the illumination section 13A, and images a plurality of positions on the surface of the workpiece W. Thus, the controller 21 acquires captured images of a plurality of positions on the surface of the workpiece W.

(Modification Example 2)

The controller 21 of the processing apparatus 20 of modification example 2 executes the following processing instead of steps B1 to B3 of the above-described defect inspection processing.

Specifically, the controller 21 causes the plurality of imaging sections 12 to continuously capture at the predetermined interval the workpiece W being conveyed, and acquires a plurality of continuously captured images of the workpiece W. The plurality of imaging sections 12 include the imaging section 12 to image the workpiece W from the Z-axis positive direction, the imaging section 12 to image the workpiece W from the Y-axis positive direction, and the imaging section 12 to image the workpiece W from the Y-axis negative direction.

Next, the controller 21 performs template matching on the continuously captured images of the workpiece W corresponding to each imaging section 12, using the reference edge information stored in step A4 as the template data. Thus, the controller 21 detects the edge from the continuously captured images of the workpiece W corresponding to the respective imaging sections 12.

Next, the controller 21 acquires edge information on the edge detected from the continuously captured images corresponding to each of the imaging sections 12. The edge information of the detected edge includes measurement position information of the detected edge.

The controller 21 measures the position and posture of the workpiece W by acquiring measurement position information on the edge from the continuously captured images corresponding to each of the imaging sections 12. Thus, the position and posture of the workpiece W can be measured more accurately.

The controller 21 of modification example 2 generates the second coordinate conversion table by associating the position of the workpiece surface with the positions on the plurality of captured images based on the measured position and posture of the workpiece W and the correspondence relationship (first coordinate conversion table) between the position of the workpiece model surface and the positions on the captured images captured in the plurality of illumination states.

(Modification Example 3)

The system 1 of modification example 3 includes a position measurement unit (not illustrated) which cooperates with the processing apparatus 20 to perform steps B1 to B5 of the defect inspection processing. The configuration of the position measurement unit is similar to that of the inspection unit 10. The position measurement unit is installed on the upstream side in the conveyance direction of the workpiece W relative to the inspection unit 10.

In modification example 3, the controller 21 of the processing apparatus 20 causes the workpiece W as the inspection target to be conveyed so as to pass through the position measurement unit, and executes steps B1 to B5 of the defect inspection processing on the workpiece W by using the position measurement unit. Thus, the controller 21 generates the second coordinate conversion table by correcting the first coordinate conversion table. Next, the controller 21 causes the workpiece W to be conveyed so as to pass through the inspection unit 10, and executes step B1 and steps B6 to B12 of the defect inspection processing on the workpiece W. In step B6, the controller 21 converts the image coordinates into the workpiece coordinates by using the second coordinate conversion table generated in advance, and executes the subsequent processing.

Thus, since coordinate conversion can be performed using the second coordinate conversion table generated in advance, the processing in step B6 and subsequent steps can be executed immediately after the capturing of the workpiece W in the defect inspection processing.

(Modification Example 4)

The inspection unit 10 of modification example 4 includes a plurality of laser range finders 17 illustrated in FIG. 13 in addition to the conveyance section 11, the imaging section 12, the illumination section 13, the sensing section 14, and the position detecting section 15. The laser range finder 17 is installed on the Z-axis positive direction side of the workpiece W. The laser range finder 17 measures the distance to the surface of the workpiece W in the vicinity of the front end, the middle, the rear end, or the like of the workpiece W in the X-axis direction, and outputs the measurement result to the processing apparatus 20. The controller 21 of the processing apparatus 20 of modification example 4 executes the following processing instead of the above-described reference position registration processing.

Specifically, the controller 21 causes the plurality of laser range finders 17 to measure the distance to the surface of the workpiece W and acquires the measurement result.

Next, the controller 21 stores distance information to the surface of the workpiece W in the storage section 22, thereby registering the distance information to the surface of the workpiece W as reference position information.

The controller 21 of the processing apparatus 20 of modification example 4 executes the following processing instead of steps B2 to B4 of the above-described defect inspection processing.

Specifically, the controller 21 causes the plurality of laser range finders 17 to measure the distance to the surface of the workpiece W and acquires the measurement result.

Next, the controller 21 compares the reference position information stored in the storage section 22 with the distance information (measurement position information) to the surface of the workpiece W which is the measurement result. Thus, the controller 21 calculates a position correction amount that is a difference between the reference position WO indicated by the reference position information and the measurement position indicated by the distance information to the surface of the workpiece W.

For example, when the reference position in the Z-axis direction is 1500 mm and the measurement position in the Z-axis direction is 1490 mm, the controller 21 calculates the position correction amount in the Z-axis direction as -10 mm.

Thus, the spatial position of the workpiece W can be measured. Thus, a difference between the reference position and the measurement position due to the rotation of the workpiece W in the XY plane can be measured.

The controller 21 of the processing apparatus 20 of modification example 4 may execute the following processing before the defect inspection processing on the workpiece W. Specifically, the controller 21 causes the imaging section 12 to continuously capture at the predetermined interval images of the workpiece W being conveyed, and acquires continuously captured images of the workpiece W.

Next, the controller 21 calculates the length per 1 pixel of the surface of the workpiece W in the captured image of the workpiece W. The controller 21 may calculate the length per 1 pixel of the surface of the workpiece W based on a design value of the workpiece W without using the captured image of the workpiece W.

In this case, the controller 21 converts the position correction amount, which is the difference between the reference position WO indicated by the reference position information and the measurement position indicated by the distance information to the surface of the workpiece W, into pixels. For example, when the position correction amount is -10 mm and the length per 1 pixel of the surface of the workpiece W is 1 mm, the controller 21 calculates the position correction amount as -10 pixels.

(Modification Example 5)

In step B5 of the defect inspection process of the above-described embodiment, the controller 21 corrects the coordinate conversion table for converting the image coordinates and the workpiece coordinates based on the position correction amount calculated in step B4, but the present invention is not limited thereto.

The controller 21 of the processing apparatus 20 in modification example 5 may execute the following processing in step B5 of the defect inspection processing. To be specific, the controller 21 converts, using the first coordinate conversion table stored in the storage section 22, the image coordinates into the workpiece model two dimensional coordinates in all the captured images of the workpiece W acquired in step B1. Next, the controller 21 corrects each of the coordinates after the coordinate conversion, based on the position correction amount calculated in step B4.

(Modification Example 6)

The controller 21 of the processing apparatus 20 in modification example 6 generates a third coordinate conversion table for converting workpiece model two dimensional coordinates into image coordinates on the basis of the three dimensional data of the workpiece model and the imaging model.

A third coordinate conversion table for converting workpiece model two dimensional coordinates into image coordinates is expressed by the following Expression (5). Expression (5) (C, frame, X, Z) = f-1 (MX, MY)

"C" is identification information for identifying the imaging section 12.

The controller 21 in modification example 6 can acquire the image coordinates (C, frame, X, Z) corresponding to the workpiece coordinates by inputting the workpiece coordinates (MX, MY) in the composite image generated in step B10 of the defect inspection processing into Expression (5).

(Modification Example 7)

The controller 21 of the processing apparatus 20 in modification example 7 may generate a second coordinate conversion table for converting image coordinates and workpiece coordinates by the following processing at the time of performing the defect inspection processing described above. To be specific, the controller 21 corrects the three dimensional date of the workpiece model by the measurement position information acquired in step B3 of the defect inspection processing. Next the controller 21 generates the second coordinate conversion table based on the three dimensional data of the workpiece model after the correction and the imaging model.

In other words, the controller 21 corrects the coordinates of the workpiece model (workpiece model three dimensional coordinates) based on the position of the workpiece W measured in step B3. Next, based on the three dimensional data of the workpiece model whose coordinates have been corrected and the imaging model, the controller 21 associates the position of the workpiece surface with the positions on the plurality of captured images.

The controller 21 may acquire a ray reflection characteristic from ray information obtained by ray tracing of illumination light with which the surface of the workpiece W is irradiated and associate the ray reflection characteristic with the position (workpiece model three dimensional coordinates) of the workpiece model surface.

(Modification Example 8)

The controller 21 of the processing apparatus 20 according to modification example 8 may not compress the time-series data of the pixel value at each coordinate in step B9 of the defect inspection process. In this case, in step B10, the controller 21 generates a composite image from the time-series data of the 32 pixel values which is a 32-dimensional vector. Thus, since the amount of information in the composite image increases as compared with a case where the time-series data of the pixel values at the respective workpiece coordinates is compressed, the accuracy of detection of the surface defect can be improved. In this case, the controller 21 may assign weights to the normalized time-series data of the 32 pixel values. Specifically, the controller 21 assigns a larger weight to the 8 pieces of data of the first time and the 8 pieces of data of the last time corresponding to the vicinity of the boundary between the bright band illuminated by the illumination section 13 and a dark band not illuminated by the illumination section 13 than the 16 pieces of data near the center among the 32 pieces of data. Thus, the feature in the time-series data of the pixel values can be made conspicuous in the vicinity of the boundary between the bright band and the dark band where the feature of the surface defect tends to appear.

(Modification Example 9)

The controller 21 of the processing apparatus 20 according to modification example 9 may not compress the time-series data of the pixel value at each workpiece coordinate in step B9 of the defect inspection process.

In this case, in step B10, the controller 21 calculates a feature amount for the time-series data of the 32 pixel values which is the 32-dimensional vector at each workpiece coordinate. The feature amount in the time-series data of the pixel value of modification example 9 is a phase difference from the time-series data of the reference pixel value, a difference between the maximum value and the minimum value in the pixel value, a standard deviation in the pixel value, or the like.

Next, the controller 21 generates a gray scale image which is a single channel based on the calculated feature amount in the time-series data of the pixel value. The controller 21 may perform differential processing on the generated gray scale image in order to emphasize the feature of the defect portion. The controller 21 may further perform binarization processing on the gray scale image to extract a defect portion. The controller 21 may adjust the detection sensitivity of the surface defect by adjusting the threshold value in the binarization process as a variable. In other words, the controller 21 may execute a predetermined process on the feature amount in the time-series data of the pixel value and adjust the detection sensitivity of the defect by adjusting the threshold value in the predetermined process.

Next, the controller 21 inputs the generated gray scale image to the inspection model to detect the surface defect.

As described above, the controller 21 of modification example 9 generates a number sequence (time-series data) of luminance information by arranging pieces of luminance information under different illumination states in the order of change in the illumination state (time-series order), and calculates one feature amount from the number sequence. Next, the controller 21 generates a feature amount image (gray scale image) based on the feature amount, and detects a feature of the defect appearing in the feature amount image by a machine learning model.

(Modification Example 10)

The controller 21 of the processing apparatus 20 of modification example 10 may perform the following processing before performing the defect inspection processing on the workpiece W.

Specifically, after the plurality of imaging sections 12 are installed, the controller 21 causes the imaging sections 12 to capture an image of a reference chart (checker board) disposed at a predetermined location, and acquires a plurality of captured images including the reference chart.

Next, the controller 21 calculates the position and the posture of the imaging section 12 by using a stereo matching method in the plurality of captured images including the reference chart.

Next, the controller 21 corrects the imaging model based on the calculated position and posture of the imaging section 12.

The controller 21 may measure a focal length and distortion of lens characteristics of the imaging section 12 in addition to the position and posture of the imaging section 12, and correct the imaging model based on the measurement results. Thus, an error between the imaging model and the measurement position, a variation in the lens of the imaging section 12, and the like can be corrected.

<Effect>

As described above, the defect inspection apparatus 1 according to the present embodiment is a defect inspection apparatus that detects a defect on a workpiece surface based on a captured image obtained by capturing the workpiece surface while changing an illumination state in which the workpiece surface is illuminated.

The defect inspection apparatus 1 includes a measurement section (controller 21) for measuring the position of the workpiece W.

The defect inspection apparatus 1 includes a conversion section (controller 21) that associates the position of the workpiece surface with the positions on the plurality of captured images on the basis of the position of the workpiece W measured by the measurement section and the correspondence between the position of the workpiece model surface based on the three dimensional data and the imaging model of the workpiece model and the positions on the respective captured images captured in the plurality of illumination states.

The defect inspection apparatus 1 includes an acquisition section (controller 21) acquiring, from the corresponding captured images, the luminance information under the plurality of illumination states at each position on the surface of the workpiece, on the basis of the correspondence between the position on the surface of the workpiece and the positions on the plurality of captured images.

The defect inspection apparatus 1 includes a defect detecting section (controller 21) that detects a defect on the workpiece surface based on the luminance information acquired by the acquisition section.

Thus, it is possible to detect a defect on the surface of the vehicle body with high accuracy with respect to the vehicle body flowing on the production line. Therefore, highly accurate defect inspection can be efficiently performed.

Thus, it is not necessary to spend much labor for setting the plurality of cameras at the time of introduction of the defect inspection system.

The defect inspection apparatus 1 according to the present embodiment includes the calculation section (controller 21) that calculates the feature amount in the luminance information.

The defect detecting section (controller 21) detects the defect on the basis of the feature amount calculated by the calculating section.

Thus, the defect on the surface of the vehicle body can be detected with high accuracy with respect to the vehicle body.

In the defect inspection apparatus 1 according to the present embodiment, the conversion section (controller 21) performs coordinate conversion between the three dimensional coordinates of the workpiece model and the image coordinates which are the coordinates of the captured image, based on the three dimensional data of the workpiece model and the imaging model. Thus, the conversion section associates the position of the workpiece model surface with the position on the captured image. The conversion section corrects the correspondence relationship between the position of the workpiece model surface and the position on the captured image based on the position of the workpiece. Thus, the conversion section associates the position of the workpiece surface with the positions on the plurality of captured images.

Accordingly, since the position of the workpiece surface and the positions on the plurality of captured images can be accurately associated with each other, it is possible to perform highly accurate defect inspection on the surface of the vehicle body.

In the defect inspection apparatus 1 according to the present embodiment, the conversion section (controller 21) corrects the coordinates of the workpiece model on the basis of the position of the workpiece, and associates the position of the workpiece surface with the positions on the plurality of captured images on the basis of the three dimensional data of the workpiece model whose coordinates have been corrected and the imaging model.

Accordingly, since the position of the workpiece surface and the positions on the plurality of captured images can be accurately associated with each other, it is possible to perform highly accurate defect inspection on the surface of the vehicle body.

In the defect inspection apparatus 1 according to the present embodiment, the conversion section (controller 21) corrects the coordinates of the workpiece model on the basis of the position of the workpiece, and associates the position of the workpiece surface with the positions on the plurality of captured images on the basis of the three dimensional data of the workpiece model whose coordinates have been corrected and the ray tracing of the illumination light applied to the workpiece surface as the imaging model.

Accordingly, since the position of the workpiece surface and the positions on the plurality of captured images can be accurately associated with each other, it is possible to perform highly accurate defect inspection on the surface of the vehicle body.

In the defect inspection apparatus 1 according to the present embodiment, the conversion section (controller 21) generates the table (second coordinate conversion table) indicating the correspondence between the workpiece coordinates indicating the position of the workpiece surface and the image coordinates indicating the positions on the plurality of captured images.

Thus, the coordinate conversion between the workpiece coordinates and the image coordinates can be easily performed using the second coordinate conversion table.

In the defect inspection apparatus 1 according to the present embodiment, the table (second coordinate conversion table) stores the correspondence between the workpiece coordinates and the image coordinates for only a part of the image coordinates.

The conversion section (controller 21) associates, with image coordinates not stored in the table, workpiece coordinates interpolated based on associations that are stored in the table and that correspond to other image coordinates including image coordinates closest to the image coordinates not stored in the table.

Therefore, the second coordinate conversion table does not needs to store the association between the workpiece coordinates and the image coordinates for all the image coordinates in the captured image.

In the defect inspection apparatus 1 according to the present embodiment, the imaging model includes information on the focal length, the position, and the posture of the imaging optical system included in the imaging section 12 that captures the captured image.

Accordingly, since the position of the workpiece surface and the positions on the plurality of captured images can be accurately associated with each other, it is possible to perform highly accurate defect inspection on the surface of the vehicle body.

In the defect inspection apparatus 1 according to the present embodiment, the conversion section (controller 21) associates the workpiece coordinates indicating the position of the workpiece surface with the image coordinates indicating the position on the captured image. The conversion section associates predetermined workpiece coordinates with image coordinates having no coordinates corresponding to the workpiece surface.

Thus, even image coordinates having no coordinates corresponding to the workpiece surface can be converted into workpiece coordinates.

In the defect inspection apparatus 1 according to the present embodiment, the calculation section (controller 21) generates a number sequence of luminance information by arranging pieces of luminance information under different illumination states in order of change in the illumination state, and calculates two or more feature amounts from the number sequence.

The defect detecting section (controller 21) generates a multi-channel image by inputting two or more feature amounts to a plurality of different channels one by one. The defect detecting section detects a feature of a defect appearing in the multi-channel image by a machine learning model.

Accordingly, by generating a color image which is a multi-channel image, a temporal change in a pixel value can be easily recognized by human eyes. Thus, it is possible to make it easy to perform annotation work for machine learning in the inspection model.

In the defect inspection apparatus 1 according to the present embodiment, the calculation section (controller 21) converts the luminance information into a vector having a predetermined number of dimensions by interpolating or compressing the luminance information, and calculates the feature amount in the vector.

The calculation section applies predetermined weighting to the vector.

Thus, the feature in the time-series data of the pixel values can be made conspicuous in the vicinity of the boundary between the bright band and the dark band where the feature of the surface defect tends to appear.

In the defect inspection apparatus 1 according to the present embodiment, the calculation section (controller 21) generates a number sequence of luminance information by arranging pieces of luminance information under different illumination states in order of change in the illumination state, and calculates one feature amount from the number sequence.

The defect detecting section (controller 21) generates the feature amount image based on the feature amount, and detects the feature of the defect appearing in the feature amount image by the machine learning model.

Thus, since the amount of information in the composite image increases as compared with a case where the time-series data of the pixel values at the respective workpiece coordinates is compressed, the accuracy of detection of the surface defect can be improved. In the defect inspection apparatus 1 according to the present embodiment, the conversion section (controller 21) associates the position of the workpiece surface with the positions on the plurality of captured images only for pixels having pixel values equal to or greater than a predetermined threshold value or within a predetermined range among the pixels of the captured images.

Thus, the defect inspection can be performed on the basis of only the pixels in the vicinity of the bright band, which is a portion necessary for the defect inspection of the surface of the vehicle body in the captured image.

In the defect inspection apparatus 1 according to the present embodiment, the measurement section (controller 21) measures the posture of the workpiece.

The conversion section (controller 21) associates the position of the workpiece surface with the positions on the plurality of captured images based on the position and the posture of the workpiece measured by the measurement section and the correspondence relationship between the position of the workpiece model surface and the positions on the captured images captured in the plurality of illumination states.

Accordingly, since the position of the workpiece surface and the positions on the plurality of captured images can be accurately associated with each other, it is possible to perform highly accurate defect inspection on the surface of the vehicle body.

In the defect inspection apparatus 1 according to the present embodiment, the defect detecting section (controller 21) executes a predetermined process on the feature amount, and adjusts the detection sensitivity of the defect by adjusting the threshold value in the predetermined process.

Thus, appropriate defect detection sensitivity can be set in the defect inspection for the surface of the vehicle body.

In the defect inspection apparatus 1 according to the present embodiment, in the table (second coordinate conversion table), the workpiece coordinate is associated with a variable related to the detection sensitivity of the defect.

The defect detecting section (controller 21) adjusts the detection sensitivity of the defect corresponding to the predetermined workpiece coordinates by adjusting the variable.

Thus, in the defect inspection on the surface of the vehicle body, appropriate defect detection sensitivity can be set for each workpiece coordinate.

In the defect inspection apparatus 1 according to the present embodiment, the conversion section (controller 21) acquires the ray reflection characteristics from the ray information obtained by the ray tracing of the illumination light with which the workpiece surface is irradiated, and associates the corresponding ray reflection characteristics to the positions of the workpiece model surface.

Thus, in the defect inspection for the surface of the vehicle body, it is possible to set an appropriate defect detection sensitivity according to the ray reflection characteristics corresponding to the position on the surface of the workpiece model.

In the defect inspection apparatus 1 according to the present embodiment, the conversion section (the controller 21) sets an inspection target region, a non-inspection target region, or both on the three dimensional data of the workpiece model.

Thus, the defect inspection can be performed in a desired region on the surface of the vehicle body.

In the defect inspection apparatus 1 according to the present embodiment, the machine learning model outputs an estimated value indicating a probability of the defect.

The defect detecting section (controller 21) adjusts the detection sensitivity of the defect by adjusting the threshold value in the estimated value.

Thus, appropriate defect detection sensitivity can be set in the defect inspection for the surface of the vehicle body.

In the defect inspection apparatus 1 according to the present embodiment, the conversion section (controller 21) corrects the imaging model based on the position information and the posture information of the imaging section 12 measured using the reference chart after the installation of the imaging section 12 that captures the captured image.

Accordingly, since the position of the workpiece surface and the positions on the plurality of captured images can be accurately associated with each other, it is possible to perform highly accurate defect inspection on the surface of the vehicle body.

Although the present invention has been specifically described above on the basis of the embodiments, the present invention is not limited to the above-described embodiments, and can be modified without departing from the spirit and scope thereof.

For example, in the above embodiment, the case where the workpiece W as the inspection target is the vehicle body has been illustrated and described, but the present invention is not limited thereto. By applying the present invention, it is possible to efficiently perform high-precision defect inspection on inspection targets other than vehicle bodies.

**Claims**

1. A defect inspection apparatus (1) that detects a defect of a workpiece surface based on a captured image obtained by capturing the workpiece surface while changing an illumination state for illuminating the workpiece surface, the defect inspection apparatus comprising:

   a measurement section (21) that measures a position of a workpiece (W);
   a conversion section (21) that associates a position of the workpiece surface with a position on a plurality of captured images based on the position of the workpiece measured by the measurement section and a correspondence relation between a position of a workpiece model surface based on three dimensional data of a workpiece model and an imaging model and the position on the captured images captured in a plurality of illumination states;
   an acquisition section (21) that acquires luminance information in the plurality of illumination states from corresponding captured images at each position of the workpiece surface by associating the position of the workpiece surface with the position on the plurality of captured images; and a defect detecting section (21) that detects the defect on the workpiece surface based on the luminance information acquired by the acquisition section.

2. The defect inspection apparatus according to claim 1, further comprising a calculation section (21) that calculates a feature amount in the luminance information, wherein the defect detecting section detects the defect based on the feature amount calculated by the calculation section.

3. The defect inspection apparatus according to claim 1, wherein the conversion section performs coordinate conversion between three dimensional coordinates of the workpiece model and image coordinates which are coordinates of the captured image based on the three dimensional data of the workpiece model and the imaging model to associate the position of the workpiece model surface with the position on the captured image, and corrects a correspondence relationship between the position of the workpiece model surface and the position on the captured image based on the position of the workpiece to associate the position of the workpiece surface with the position on the plurality of captured images.

4. The defect inspection apparatus according to claim 1, wherein the conversion section corrects coordinates of the workpiece model based on the position of the workpiece, and associates the position of the workpiece surface with the position on the plurality of captured images based on the three dimensional data of the workpiece model whose coordinates have been corrected and the imaging model.

5. The defect inspection apparatus according to claim 4, wherein the conversion section corrects coordinates of the workpiece model based on the position of the workpiece, and associates the position of the workpiece surface with the position on the plurality of captured images based on three dimensional data of the workpiece model whose coordinates have been corrected and ray tracing of illumination light with which the workpiece surface as the imaging model is irradiated.

6. The defect inspection apparatus according to claim 1, wherein the conversion section generates a table indicating an association between workpiece coordinates indicating the position of the workpiece surface and image coordinates indicating the position on the plurality of captured images.

7.  The defect inspection apparatus according to claim 6, wherein, the table stores an association between the workpiece coordinates and the image coordinates for only a portion of the image coordinates, and the conversion section associates, with the image coordinates not stored in the table, the workpiece coordinates interpolated based on the association corresponding to other image coordinates stored in the table and including image coordinates closest to the image coordinates not stored in the table.

8.  The defect inspection apparatus according to claim 1, wherein the imaging model includes information on a focal length, a position, and a posture of an imaging optical system included in an imaging section that captures the captured image.

9.  The defect inspection apparatus according to claim 1, wherein the conversion section associates a workpiece coordinate indicating a position of the workpiece surface with an image coordinate indicating a position on the captured image, and associates the predetermined workpiece coordinate with the image coordinate where a coordinate corresponding to the workpiece surface does not exist.

10.  The defect inspection apparatus according to claim 2, wherein, the calculation section generates a number sequence of luminance information by arranging the luminance information in different illumination states in order of change in the illumination state, and calculates two or more feature amounts from the number sequence, and the defect detecting section generates a multi-channel image by inputting the two or more feature amounts to a plurality of different channels one by one, and detects a feature of a defect appearing in the multi-channel image by a machine learning model.

11.  The defect inspection apparatus according to claim 2, wherein the calculation section converts the luminance information into a vector having a predetermined number of dimensions by interpolating or compressing the luminance information, and calculates the feature amount in the vector.

12.  The defect inspection apparatus according to claim 11, wherein the calculation section applies predetermined weighting to the vector.

13.  The defect inspection apparatus according to claim 2, wherein, the calculation section generates a number sequence of luminance information by arranging the luminance information in different illumination states in order of change in the illumination state, and calculates one feature amount from the number sequence, and the defect detecting section generates the feature amount image based on the feature amount, and detects the feature of the defect appearing in the feature amount image by the machine learning model.

14.  The defect inspection apparatus according to claim 1, wherein the conversion section associates the position of the workpiece surface with the position on the plurality of captured images only for a pixel having a pixel value equal to or greater than a predetermined threshold value or within a predetermined range among the pixels of the captured images.

15.  The defect inspection apparatus according to claim 1, wherein, the measurement section measures a posture of the workpiece, and the conversion section associates the position of the workpiece surface with the position on the plurality of captured images based on the position and a posture of the workpiece measured by the measurement section and a correspondence relationship between the position of the workpiece model surface and the position on the captured images captured in the plurality of illumination states.

16.  The defect inspection apparatus according to claim 2, wherein the defect detecting section executes predetermined processing on the feature amount, and adjusts detection sensitivity of the defect by adjusting a threshold value in the predetermined processing.

17.  The defect inspection apparatus according to claim 6, wherein, in the table, the workpiece coordinates are associated with a variable related to detection sensitivity of the defect, and the defect detecting section adjusts the detection sensitivity of the defect corresponding to a predetermined workpiece coordinate by adjusting the variable.

18.  The defect inspection apparatus according to claim 1, wherein the conversion section acquires ray reflection characteristics from ray information acquired by ray tracing of illumination light with which the workpiece surface is irradiated, and associates the corresponding ray reflection characteristics to the position on the workpiece model surface.

**19.** The defect inspection apparatus according to claim 1, wherein the conversion section sets an inspection target region, a non-inspection target region, or both on three-dimensional data of the workpiece model.

**20.** The defect inspection apparatus according to claim 10 or 13, wherein, the machine learning model outputs an estimated value representing a probability of the defect, and the defect detecting section adjusts detection sensitivity of the defect by adjusting a threshold value in the estimated value.

**21.** The defect inspection apparatus according to claim 1, wherein the conversion section corrects the imaging model based on position information and posture information of an imaging section that captures the captured image, the position information and the posture information being measured using a reference chart after installation of the imaging section.

# FIG.1

1

## INSPECTION UNIT — 10

- 11 CONVEYANCE SECTION
- 12 IMAGING SECTION
- 14 SENSING SECTION
- 15 POSITION DETECTING SECTION
- 13 ILLUMINATION SECTION
  - 131 LIGHT SOURCE

## PROCESSING APPARATUS — 20

- 21 CONTROLLER
- 22 STORAGE SECTION
  - 22a PROGRAM
- 23 COMMUNICATION SECTION
- 24 OPERATION PART
- 25 DISPLAY PART

# FIG.2A

# FIG.2B

# FIG.3

REFERENCE POSITION
REGISTRATION PROCESSING

ACQUIRE CONTINUOUS CAPTURED IMAGES OF
WORKPIECE DURING CONVEYANCE — A1

EXTRACT REGION OF EDGE — A2

ACQUIRE REFERENCE EDGE INFORMATION — A3

REGISTER REFERENCE POSITION INFORMATION — A4

END

# FIG.4

EP 4 582 794 A1

# FIG.5

| CAPTURED IMAGE | | | | | |
|---|---|---|---|---|---|
| FRAME NUMBER | 5 | 4 | 3 | 2 | 1 |

# FIG.6

DEFECT INSPECTION PROCESS

ACQUIRE CONTINUOUS CAPTURED IMAGES OF WORKPIECE — B1

DETECT EDGE — B2

ACQUIRE MEASUREMENT POSITION INFORMATION OF DETECTED EDGE — B3

CALCULATE POSITION CORRECTION AMOUNT WHICH IS DIFFERENCE OF REFERENCE POSITION AND MEASUREMENT POSITION — B4

CORRECT FIRST COORDINATE CONVERSION TABLE — B5

EXTRACT PIXEL WITH PREDETERMINED VALUE OR MORE FROM ALL IMAGED IMAGES — B6

CONVERT COORDINATES — B7

ACQUIRE TIME SERIES DATA OF PIXEL VALUE IN EACH COORDINATE — B8

COMPRESS TIME SERIES DATA OF PIXEL VALUE IN EACH COORDINATE — B9

GENERATE COMPOSITE IMAGE FROM TIME SERIES DATA OF COMPRESSED PIXEL VALUE — B10

DIVIDE COMPOSITE IMAGE — B11

DETECT DEFECT — B12

END

## FIG.7

| CAPTURED IMAGE | E2 E22 | | | E1 E11 |
|---|---|---|---|---|
| FRAME NUMBER | 5 | 4 | 3 | 2 | 1 |
| DIFFERENCE OF REFERENCE POSITION AND MEASUREMENT POSITION (pix) | | (X,Z)=(2,0) | | | (X,Z)=(8,3) |
| POSITION CORRECTION AMOUNT (pix) | (X,Z)=(0,-1) | (X,Z)=(2,0) | (X,Z)=(4,1) | (X,Z)=(6,2) | (X,Z)=(8,3) |

EP 4 582 794 A1

# FIG.8

# FIG.9

FIG.10

# FIG.11A

# FIG.11B

# FIG.11C

# FIG.12

16A

12A

10A

13A

W

Z

Y ⊗ → X

# FIG.13

17

10

W

W0

Z

Y ⊗ → X

## EUROPEAN SEARCH REPORT

**Application Number**

EP 24 38 2599

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/175669 A1 (BIAN XIAO [US] ET AL) 4 June 2020 (2020-06-04) | 1-4, 6-17, 19-21 | INV.<br>G01N21/88<br>G01N21/956 |
| Y | * paragraphs [0018] - [0107]; claims; figures * | 5,18 | G06T7/00 |
| X | JP 2019 032268 A (HITACHI METALS LTD) 28 February 2019 (2019-02-28) * the whole document * | 1-4 | |
| X | US 2023/080612 A1 (YOON KIWOOK [KR] ET AL) 16 March 2023 (2023-03-16) * paragraphs [0022] - [0105]; claims; figures * | 1-4 | |
| Y | US 2024/037728 A1 (SOUMA YOSHIHITO [JP]) 1 February 2024 (2024-02-01) * paragraphs [0039] - [0076]; figures * | 5,18 | |

TECHNICAL FIELDS
SEARCHED        (IPC)

G01N
G06T

The present search report has been drawn up for all claims

| Place of search | Date of completion of the search | Examiner |
|---|---|---|
| Munich | 19 November 2024 | Politsch, Erich |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
...........................................................................
& : member of the same patent family, corresponding
  document

EPO FORM 1503 03.82 (P04C01)

3

## ANNEX TO THE EUROPEAN SEARCH REPORT
## ON EUROPEAN PATENT APPLICATION NO.

EP 24 38 2599

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2024

| Patent document cited in search report | Publication date | Patent family member(s) | | Publication date |
|---|---|---|---|---|
| US 2020175669 A1 | 04-06-2020 | CA | 3062044 A1 | 04-06-2020 |
| | | CN | 111272763 A | 12-06-2020 |
| | | EP | 3664023 A1 | 10-06-2020 |
| | | US | 2020175669 A1 | 04-06-2020 |
| JP 2019032268 A | 28-02-2019 | JP | 6922539 B2 | 18-08-2021 |
| | | JP | 2019032268 A | 28-02-2019 |
| US 2023080612 A1 | 16-03-2023 | NONE | | |
| US 2024037728 A1 | 01-02-2024 | CN | 117475192 A | 30-01-2024 |
| | | EP | 4318394 A1 | 07-02-2024 |
| | | JP | 2024018241 A | 08-02-2024 |
| | | US | 2024037728 A1 | 01-02-2024 |

EPO FORM P0459

For more details about this annex : see Official Journal of the European Patent Office, No. 12/82

**REFERENCES CITED IN THE DESCRIPTION**

**Patent documents cited in the description**

- JP 2010216870 A
- JP 2023032374 A
- JP 2013195368 A